# EUROPEAN PATENT APPLICATION

(11) **EP 1 203 656 A1**
(43) Date of publication of application: **08.05.2002**
(21) Application number: 00922903.0
(22) Date of filing: 28.04.2000
(51) Int. Cl.: B32B 27/00

(54) **LAYERED PRODUCT AND PROCESS FOR PRODUCING THE SAME**

(30) Priority: 28.04.1999 JP 12299999; 24.05.1999 JP 14255599
(71) Applicant: NIPPON ZEON CO., LTD., Chiyoda-ku Tokyo 100-8323 (JP)
(72) Inventor: KAWATA, Keiichi, R & D Ctr., Nippon Zeon Co. Ltd., Kawasaki-shi, Kanagawa 210-9507 (JP); SHINOHARA, Naoki R & D Ctr., Nippon Zeon Co. Ltd., Kawasaki-shi, Kanagawa 210-9507 (JP)
(74) Representative: Albrecht, Thomas, Dr.
(86) International application number: JP0002826
(87) International publication number: WO0066357

(57) **Abstract**

A laminate of a multi-layer structure, containing at least one alicyclic polymer layer (A), at least one thermoplastic resin layer (B) and at least one layer (C) of a resin composition containing an alicyclic polymer and a thermoplastic resin, and a production process thereof.

## Description

### TECHNICAL FIELD

The present invention relates to a laminate and a production process thereof, and particularly to a laminate free of clouding, high in transparency and heat resistance, excellent in tearability or cuttability, good in adhesion to others and also excellent in smoothness, and a production process thereof. The laminate according to the present invention is suitable for use in packaging materials (including wrapping films) for food, drug tablets, sundries, daily goods, etc., plastic containers and the like.

### BACKGROUND ART

Various kinds of resin materials have heretofore been used in the form of a single layer or a multi-layer laminate in food packaging films, drug packaging films, agricultural films, plastic containers, etc. However, it is indicated that resin materials such as general-purpose polyvinyl chloride resins and polyvinylidene chloride resins may possibly produce substances such as dioxin and environmental hormones, which exert an adverse influence on life environment and living bodies. Therefore, such resin materials have been going to be changed to resin materials containing no chlorine atom and hence having high environmental safety in fields of packaging materials and the like, and many researches and developments have come to be made.

In the course of such researches and developments, there have been proposed single-layer films composed of a norbornene addition polymer and laminated films obtained by laminating a norbornene addition polymer layer and a polyolefin resin layer on each other (Japanese Patent Application Laid-Open No. 72210/1990), and the like. Typical norbornene addition polymers include addition polymer of a norbornene monomer and ethylene, which are resin materials having no possibility that generate substances such as dioxin and environmental hormones, which exert an adverse influence on life environment and living bodies, may be produced, like polyolefin resins such as polyethylene.

The singly-layer films composed of the norbornene addition polymer are high in transparency and low in hygroscopicity. Since such a singly-layer film is insufficient in oil resistance or resistance to greases and oils, however, the film tends to cause cracking and clouding according to the kind of food when it is used in such a form that it comes into direct contact with food. The singly-layer film is poor in adhesion to others and is hence not suitable for use in fields of which adhesion packaging is required, and the like. In addition, the singly-layer film is not suitable for use in fields of which hygroscopicity is required to some extend.

The above defects of the singly-layer films composed of the norbornene addition polymer can be improved by laminating it on another thermoplastic resin layer into a laminated film. Examples of another thermoplastic resin layer include polyolefin resin layers and polyamide resin layers. However, a laminated film containing the norbornene addition polymer layer has been easy to cause such inconvenience that when it is applied to use applications, in which the laminated film is stretched for use like, for example, a wrapping film, white wrinkles occur at a stretched portion, or one layer is broken due to delamination.

Since such a laminated film is insufficient in tearability or cuttability, it has also involved a problem that its workability is poor when it is used as, for example, a wrapping film. In addition, the laminated film has been difficult to reconcile high transparency with surface smoothness.

As the causes of the above defects of the laminated film containing the norbornene addition polymer layer, it is considered that the compatibility of the norbornene addition polymer with other thermoplastic resins is insufficient, that adhesion between layers in the laminated film is insufficient, and that the elongation percentages of the individual layer are different. However, any laminate, in which these defects were fully overcome, has not been proposed in the prior art.

According to a method of forming a film with a resin composition, in which a norbornene addition polymer is blended with a polyolefin resin, for the purpose of improving the defects of the singly-layer film composed of the norbornene addition polymer, it is difficult to provide a film having high transparency and excellent surface smoothness while retaining the strength of the single-layer film composed of the norbornene addition polymer.

### DISCLOSURE OF THE INVENTION

It is an object of the present invention to provide a multi-layer laminated film which contains a resin layer composed of an alicyclic polymer typified by a norbornene polymer and is free of clouding, high in transparency and heat resistance, excellent in tearability or cuttability, good in adhesion to others and further excellent in smoothness, and a production process thereof.

Another object of the present invention is to provide a multi-layer laminated film which contains an alicyclic polymer layer and another thermoplastic resin layer and is excellent in transparency, heat resistance, low moisture permeability, cuttability, mechanical strength and the like and hard to cause delamination, and a production process thereof.

The present inventors have carried out an extensive investigation with a view toward achieving the above objects. As a result, it has been found that when at least one alicyclic polymer layer (A), at least one thermoplastic resin layer (B) and at least one layer (C) of a resin composition comprising an alicyclic polymer and a thermoplastic resin are combined to form a multi-layer laminate, the laminate can be provided as a laminate free of clouding, high in transparency and heat resistance, excellent in tearability or cuttability and good in adhesion to others.

The resin composition layer (C) is preferably arranged as an intermediate layer in the multi-layer laminate. When the resin composition layer (C) is arranged between the alicyclic polymer layer (A) and the thermoplastic resin layer (B), the delamination of the resulting laminate can be prevented to a great extent. A laminate having a layer structure that the resin composition layer (C) is arranged between 2 alicyclic polymer layers (A) has high surface smoothness.

When a linear low density polyolefin having a long period of at most 275 angstroms as measured by a small angle X-ray scattering method is used as the thermoplastic resin in the resin composition layer (C), a laminate having far excellent various properties can be provided.

When a resin layer (D) containing the linear low density polyolefin having a long period of at most 275 angstroms as measured by the small angle X-ray scattering method is arranged, for example, between the alicyclic polymer layer (A) and the thermoplastic resin layer (B), the delamination of the resulting laminate can be prevented at a high level. This resin layer (D) may be formed from either the linear low density polyolefin alone or a resin composition comprising the linear low density polyolefin and another thermoplastic resin. The resin layer (D) formed from a resin composition comprising the linear low density polyolefin and an alicyclic polymer is included in the above-described resin composition layer (C).

The resin composition layer (C) can be formed by utilizing waste materials discharged in the production step of the laminate having the alicyclic polymer layer (A) and the thermoplastic resin layer (B), thereby making effective use of the waste materials and moreover enhancing the compatibility of the alicyclic polymer with the thermoplastic resin. More specifically, the resin composition layer (C) can preferably be formed by melting and kneading the alicyclic polymer layer (A) and the thermoplastic resin layer (B).

The resin composition containing the linear low density polyolefin having a long period of at most 275 angstroms as measured by the small angle X-ray scattering method is novel and can exhibit such a function as described above.

The present invention has been led to completion on the basis of these findings.

According to the present invention, there is thus provided a laminate of a multi-layer structure, comprising at least one alicyclic polymer layer (A), at least one thermoplastic resin layer (B) and at least one layer (C) of a resin composition comprising an alicyclic polymer and a thermoplastic resin.

According to the present invention, there is also provided a laminate of a multi-layer structure, comprising at least one alicyclic polymer layer (A), at least one thermoplastic resin layer (B) and at least one resin layer (D) comprising a linear low density polyolefin having a long period of at most 275 angstroms as measured by the small angle X-ray scattering method.

According to the present invention, there is further provided a resin composition comprising an alicyclic polymer and a linear low density polyolefin having a long period of at most 275 angstroms as measured by the small angle X-ray scattering method.

According to the present invention, there is still further provided a process for producing a multi-layer laminate, which comprises melting and kneading a laminate material comprising at least one alicyclic polymer layer (A) and at least one thermoplastic resin layer (B) to prepare a resin composition, and then extruding the resin composition, and an alicyclic polymer or a thermoplastic resin or both alicyclic polymer and thermoplastic resin.

### BEST MODE FOR CARRYING OUT THE INVENTION

### 1. Alicyclic polymer :

The alicyclic polymer used in the present invention is a polymer having an alicyclic structure at its main chain and/or side chain. The alicyclic polymer preferably has the alicyclic structure at its main chain from the viewpoints of mechanical strength, heat resistance and the like. Examples of the alicyclic structure include a cycloalkane structure, a cycloalkene structure and the like. The cycloalkane structure is preferred from the viewpoints of mechanical strength, heat resistance and the like. Examples of the alicyclic structure include a monocycle, polycycle, a fused polycycle, a crosslinked cycle and combined polycycles thereof. No particular limitation is imposed on the number of carbon atoms forming the alicyclic structure. However, it is within a range of generally 4 to 30 carbons, preferably 5 to 20 carbons, more preferably 5 to 15 carbons. Various properties such as mechanical strength, heat resistance and moldability are balanced with one another at a high level by such an alicyclic structure.

A proportion of the repeating unit having the alicyclic structure in the alicyclic structure polymer can be suitably selected as necessary for the end application intended. However, it is generally at least 30% by weight, preferably at least 50% by weight, more preferably at least 70% by weight. The upper limit of the proportion is 100% by weight. If the proportion of the repeating unit having the alicyclic structure in the alicyclic polymer is too low, the heat resistance of the alicyclic polymer becomes poor. It is hence not preferable to contain such a repeating unit in a too low proportion. No particular limitation is imposed on other repeating units than the repeating unit having the alicyclic structure in the alicyclic polymer, and they are suitably selected as necessary for the end application intended. More specifically, as the alicyclic polymer, may be used not only a homopolymer of a monomer having an alicyclic structure or a copolymer of such alicyclic monomers, but also a copolymer of the alicyclic monomer with a non-alicyclic monomer copolymerizable therewith. After polymerization, the resultant alicyclic polymer may be subjected to such a treatment that an unsaturated bond in the main chain or side chain is hydrogenated into a saturated bond.

As examples of the alicyclic polymer, may be mentioned (1) norbornene polymers, (2) monocyclic cycloolefin polymers, (3) cyclic conjugated diene polymers, (4) vinyl cyclic hydrocarbon polymers, and hydrogenated products thereof. Among these, the norbornene polymers and hydrogenated products thereof, and the cyclic conjugated' diene polymers and hydrogenated products thereof are preferred.

### (1) Norbornene polymer:

No particular limitation is imposed on the norbornene polymers, and examples thereof include polymers obtained by subjecting a norbornene monomer to ring-opening polymerization or addition polymerization in accordance with, for example, the process disclosed in Japanese Patent Application Laid-Open No. 14882/1991 or 122137/1991. The norbornene polymers include homopolymers of norbornene monomers, copolymer of at least two norbornene monomers, copolymers of a norbornene monomer with other monomers copolymerizable therewith, modified products thereof. The modified products include the above-described hydrogenated products and besides products modified by introducing a polar group, such as epoxy-modified products and maleic anhydride-modified products.

Specific examples of the norbornene polymers include ① ring-opening (co)polymers of norbornene monomer(s) and hydrogenated products thereof, ② addition (co)polymers of norbornene monomer(s) and ③ addition copolymers of a norbornene monomer and a vinyl monomer. Of these, the hydrogenated products of the ring-opening (co)polymers of the norbornene monomer(s) are particularly preferred from the viewpoints of heat resistance, oil resistance or resistance to greases and oils, and the like.

The norbornene monomers are publicly known monomers disclosed in the above-described publications, Japanese Patent Application Laid-Open Nos. 227424/1990 and 276842/1990, etc.

Examples of the norbornene monomers include bicyclo[2.2.1]hept-2-ene (trivial name: norbornene), 5-methyl-bicyclo[2.2.1]hept-2-ene, 5,5-dimethyl-bicyclo-[2.2.1]hept-2-ene, 5-ethyl-bicyclo[2.2.1]hept-2-ene, 5-butyl-bicyclo[2.2.1]hept-2-ene, 5-hexyl-bicyclo[2.2.1]hept-2-ene, 5-octyl-bicyclo[2.2.1]hept-2-ene, 5-octadecyl-bicyclo[2.2.1]hept-2-ene, 5-ethylidene-bicyclo[2.2.1]hept-2-ene, 5-methylidene-bicyclo[2.2.1]hept-2-ene, 5-vinyl-bicyclo[2.2.1]hept-2-ene, 5-propenyl-bicyclo[2.2.1]hept-2-ene, 5-methoxycarbonyl-bicyclo[2.2.1]hept-2-ene, 5-cyano-bicyclo[2.2.1]hept-2-ene, 5-methyl-5-methoxycarbonyl-bicyclo[2.2.1]hept-2-ene, 5-ethoxycarbonyl-bicyclo-[2.2.1]hept-2-ene, bicyclo[2.2.1]hept-5-enyl 2-methyl-propionate, bicyclo[2.2.1]hept-5-enyl 2-methyloctanate, bicyclo[2.2.1]hept-2-ene-5,6-dicarboxylic acid anhydride, 5-hydroxymethylbicyclo[2.2.1]hept-2-ene, 5,6-di(hydroxymethyl)-bicyclo[2.2.1]hept-2-ene, 5-hydroxyisopropyl-bicyclo[2.2.1]hept-2-ene, 5,6-dicarboxy-bicyclo[2.2.1]hept-2-ene, bicyclo[2.2.1]hept-2-ene-5,6-dicarboxylic acid imide, 5-cyclopentyl-bicyclo[2.2.1]hept-2-ene, 5-cyclohexyl-bicyclo[2.2.1]hept-2-ene, 5-cyclohexenyl-bicyclo-[2.2.1]hept-2-ene, 5-phenyl-bicyclo[2.2.1]hept-2-ene, tricyclo[4.3.0.1^{2,5}]dec-3,7-diene (trivial name: dicyclopentadiene), tricyclo[4.3.0.1^{2,5}]dec-3-ene, tricyclo[4.4.0.1^{2,5}]undec-3,7-diene, tricyclo[4.4.0.1^{2,5}]-undec-3,8-diene, tricyclo[4.4.0.1^{2,5}]undec-3-ene, tetracyclo[7.4.0.1^{10,13}.0^{2,7}]tridec-2,4,6,11-tetraene (another name: 1,4-methano-1,4,4a,9a-tetrahydrofluorene), tetracyclo[8.4.0.1^{11,14}.0^{3,8}]tetradec-3,5,7,12-11-tetraene (another name: 1,4-methano-1,4,4a,5,10,10a-hexahydro-anthracene), tetracyclo[4.4.0.1^{2,5}.1^{7,10}]-dodec-3-ene (trivial name: tetracyclododecene), 8-methyltetracyclo-[4.4.0.1^{2,5}.1^{7,10}]dodec-3-ene, 8-ethyltetracyclo-[4.4.0.1^{2,5}.1^{7,10}]dodec-3-ene, 8-methylidenetetracyclo-[4.4.0.1^{2,5}.1^{7,10}]dodec-3-ene, 8-ethylidenetetracyclo-[4.4.0.1^{2,5}.1^{7,10}]dodec-3-ene, 8-vinyltetracyclo-[4.4.0.1^{2,5}.1^{7,10}]dodec-3-ene, 8-propenyltetracyclo-[4.4.0.1^{2,5}.1^{7,10}]dodec-3-ene, 8-methoxycarboxy-tetracyclo-[4.4.0.1^{2,5}.1^{7,10}]dodec-3-ene, 8-methyl-8-methoxycarbonyl-tetracyclo[4.4.0.1^{2,5}.1^{7,10}]dodec-3-ene, 8-hydroxymethyl-tetracyclo[4.4.0.1^{2,5}.1^{7,10}]dodec-3-ene, 8-carboxy-tetracyclo[4.4.0.1^{2,5}.1^{7,10}]dodec-3-ene, 8-cyclopentyl-tetracyclo[4.4.0.1^{2,5}.1^{7,10}]dodec-3-ene, 8-cyclohexyl-tetracyclo[4.4.0.1^{2,5}.1^{7,10}]dodec-3-ene, 8-cyclohexenyl-tetracyclo[4.4.0.1^{2,5}.1^{7,10}]dodec-3-ene, 8-phenyl-tetracyclo-[4.4.0.1^{2,5}.1^{7,10}]dodec-3-ene, pentacyclo[6.5.1.1^{3,6}.0^{2,7}.0^{9,13}]-pentadec-3,10-diene and pentacyclo[7.4.0.1^{3,6}.1^{10,13}.0^{2,7}]-pentadec-4,11-diene.

These norbornene monomers may be used either singly or in any combination thereof. The norbornene polymer may be a copolymer of a norbornene monomer and another monomer copolymerizable therewith. The content of bound norbornene monomer units in the norbornene polymer is suitably selected as necessary for the end application intended. However, it is generally at least 30% by weight, preferably at least 50% by weight, more preferably at least 70% by weight, whereby the heat resistance, elongation properties and the like of such a polymer can be balanced with each other at a high level.

Examples of the vinyl monomer copolymerizable with the norbornene monomer include ethylenes or α-olefins having 2 to 20 carbon atoms, such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene and 1-eicosene; cycloolefins such as cyclobutene, cyclopentene, cyclohexene, 3,4-dimethylcyclopentene, 3-methylcyclohexene, 2-(2-methylbutyl)-1-cyclohexene, cyclooctene and 3a,5,6,7a-tetrahydro-4,7-methano-1H-indene; and non-conjugated dienes such as 1,4-hexadiene, 4-methyl-1,4-hexadiene, 5-methyl-1,4-hexadiene and 1,7-octadiene. These vinyl monomers may be used either singly or in any combination thereof.

No particular limitation is imposed on the polymerization process of the norbornene monomer, or the norbornene monomer and the vinyl monomer copolymerizable with the norbornene monomer, and a hydrogenation process. The polymerization and hydrogenation may be conducted in accordance with any publicly-known processes.

### (2) Monocyclic cycloolefin polymer:

As examples of the monocyclic cycloolefin polymer, may be mentioned addition (co)polymers of a monocyclic cycloolefin monomer such as cyclohexene, cycloheptene or cyclooctene, which are disclosed in Japanese Patent Application Laid-Open No. 66216/1989.

### (3) Cyclic conjugated diene polymer:

As examples of the cyclic conjugated diene polymer, may be mentioned (co)polymers obtained by subjecting a cyclic conjugated diene such as cyclopentadiene or cyclohexadiene to 1,2- or 1,4-addition polymerization, and hydrogenated products thereof, which are disclosed in Japanese Patent Application Laid-Open Nos. 136057/1994 and 258318/1995.

### (4) Vinyl cyclic hydrocarbon polymer:

As examples of the vinyl alicyclic hydrocarbon polymer, may be mentioned polymers of a vinyl cyclic hydrocarbon monomer such as vinylcyclohexene or vinylcyclohexane, and hydrogenated products thereof, which are disclosed in Japanese Patent Application Laid-Open No. 59989/1976, and polymers of a vinyl aromatic monomer such as styrene or α-methylstyrene, the aromatic ring portions of which have been hydrogenated, and which are disclosed in Japanese Patent Application Laid-Open Nos. 43910/1988 and 1706/1989.

The alicyclic polymer may have a polar group such as a hydroxyl group or carboxyl group.

The alicyclic polymer having a polar group is obtained by, for example, (i) introducing a compound having a polar group into said alicyclic polymer by a modification reaction, or (ii) copolymerizing a monomer containing a polar group as a comonomer. Examples of the polar group include hydroxyl, carboxyl, oxy, epoxy, glycidyl, oxycarbonyl, carbonyloxy, carbonyl and amino groups.

The alicyclic polymers may be used either singly or in any combination thereof.

No particular limitation is imposed on the molecular weight of the alicyclic polymer. The molecular weight of the alicyclic polymer is generally 1,000 to 1,000,000, preferably 5,000 to 500,000, more preferably 10,000 to 250,000 when expressed by a weight average molecular weight (Mw) in terms of polystylene as measured by gel permeation chromatography (GPC) using cyclohexane or toluene as a solvent. When the weight average molecular weight (Mw) of the alicyclic polymer falls within this range, the heat resistance and adhesion property of the polymer and the surface smoothness of the resulting laminate are balanced with each other at a high level.

The molecular weight distribution of the alicyclic polymer is expressed by a ratio (Mw/Mn) of the weight average molecular weight (Mw) to the number average molecular weight (Mn) as measured by GPC using cyclohexane or toluene as a solvent and is generally at most 5, preferably at most 4, more preferably at most 3.

The ranges of the weight average molecular weight (Mw) and molecular weight distribution (Mw/Mn) and the measuring methods thereof are particularly suitable for the norbornene polymers. However, the present invention is not limited thereto. In the case of an alicyclic polymer the weight average molecular weight and molecular weight distribution of which cannot be measured by the above-described method, that having a melt viscosity or polymerization degree to such an extent that a resin layer can be formed by an ordinary melt processing process is used.

The glass transition temperature of the alicyclic polymer may be suitably selected as necessary for the end application intended. However, it is generally at least 50°C, preferably at least 70°C, more preferably at least 100°C, most preferably at least 125°C. The upper limit of the glass transition temperature is generally about 200°C.

### 2. Thermoplastic resins :

The thermoplastic resins used in the present invention are other thermoplastic resins than the above-described alicyclic polymers.

Examples of the thermoplastic resins include polyolefin resins such as polyethylene (low density polyethylene, high density polyethylene, linear low density polyethylene, very low density polyethylene, etc.), polypropylene, syndiotactic polypropylene, polybutene, polypentene and ionomers; saturated polyester resins such as polyethylene terephthalate and polybutylene terephthalate; polyamide resins such as nylon 6 and nylon 66; ethylene copolymers such as ethylene-ethyl acrylate copolymers and ethylene-vinyl acetate copolymers; and polycarbonate resins. Among these, polyolefin resins such as polyethylene and polypropylene are preferred for use in packaging materials and the like.

As the thermoplastic resin used for forming the resin composition layer (C) containing the alicyclic polymer and the thermoplastic resin, may be used a linear low density polyolefin having a long period of at most 275 angstroms as measured by a small angle X-ray scattering method.

In order to arrange the kinds of the thermoplastic resins, the linear low density polyolefin having a long period of at most 275 angstroms as measured by a small angle X-ray scattering method is referred to as the linear low density polyolefin (d), the thermoplastic resins including the linear low density polyolefin (d) as the thermoplastic resins (b), the thermoplastic resins other than the linear low density polyolefin (d) as the thermoplastic resins (b1), and the polyolefin resins other than the linear low density polyolefin (d) as the polyolefin resins (b2).

### 3. Linear low density polyolefin:

As the thermoplastic resin (b) used for forming the resin composition layer (C) containing the alicyclic polymer and the thermoplastic resin in the present invention, may be used the linear low density polyolefin (d) having a long period of at most 275 angstroms as measured by a small angle X-ray scattering method. The linear low density polyolefin (d) may be used either singly or in a combination with another thermoplastic resin to form the resin layer (D). The long period of the linear low density polyolefin (d) is preferably at most 260 angstroms, more preferably at most 245 angstroms.

When a resin composition obtained by melt kneading the alicyclic polymer with the linear low density polyolefin (d) is used to form the resin composition layer (C), and the resin composition layer (C) is arranged between the alicyclic polymer layer (A) and the thermoplastic resin layer (B), the delamination of the resulting laminate can be prevented more effectively. In this case, the thermoplastic resin (b) forming the thermoplastic resin layer (B) and the linear low density polyolefin (d) may be the same or different from each other.

When the resin layer (D) containing the linear low density polyolefin (d) is arranged between the alicyclic polymer layer (A) and the thermoplastic resin layer (B), the delamination between the alicyclic polymer layer (A) and the thermoplastic resin layer (B) can be prevented effectively, and moreover a laminate excellent in mechanical strength can be provided. In this case, as the thermoplastic resin forming the thermoplastic resin layer (B) adjacent to the resin layer (D), the thermoplastic resin (b1) different from the linear low density polyolefin (d) is generally used, but they may be the same.

The lamellar thickness of the linear low density polyolefin (d) is preferably at most 145 angstroms, more preferably at most 140 angstroms. The resulting laminate shows a tendency to more enhancing strength as the lamellar thickness of the linear low density polyolefin (d) becomes thinner.

The linear low density polyolefin (d) has a degree of crystallinity of preferably 20 to 85%, more preferably 35 to 70%, particularly preferably 45 to 65% as measured by large angle X-rays.

The density (a value measured in accordance with ASTM D 1505) of the linear low density polyolefin (d) is preferably 0.8 to 1.0 g/cm³, more preferably 0.85 to 0.97 g/cm³. The melt flow rate of the linear low density polyolefin (d) as measured at 190°C in accordance with ASTM D 1238 is preferably 0.01 to 10 g/10 min, more preferably 0.5 to 7 g/10 min. The melting point of the linear low density polyolefin (d) is preferably 80 to 150°C, more preferably 90 to 130°C.

No particular limitation is imposed on the production process of the linear low density polyolefin (d). However, a polymer obtained by using a metallocene catalyst is preferred. Examples of the metallocene catalyst include cyclopentadienyl derivatives of transition metals such as zirconium, titanium, hafnium, vanadium, niobium, tantalum and chromium, and combinations of such a cyclopentadienyl derivative and an organoaluminum compound such as aluminoxane.

The polymerization of the linear low density polyolefin (d) is preferably conducted by a vapor-phase process making no use of any solvent. The polymerization by the vapor-phase process tends to provide a linear low density polyolefin (d) containing no unnecessary by-product. The linear low density polyolefin (d) obtained by the polymerization using the metallocene catalyst is used, thereby enhancing the mechanical strength and the like of the resulting laminate.

No particular limitation is imposed on the monomer composition of the linear low density polyolefin (d). For example, ethylene; and α-olefins such as propylene, 1-butene, 1-pentene, 1-hexene, 1-octene and 4-methyl-1-pentene may be used either singly or in any combination thereof. Other copolymerizable monomers such as vinyl acetate may be used as copolymerizable components. In the present invention, the linear low density polyolefin (d) is preferably a copolymer of ethylene and an α-olefin in that the clouding of the resulting laminate is lessened, and delamination becomes hard to occur. As the linear low density polyolefin (d), is particularly preferred an ethylene-1-hexane copolymer, ethylene-1-octene copolymer or the like.

### 4. Other components :

In the present invention, various kinds of components such as additives may be incorporated into the alicyclic polymers and/or the thermoplastic resins as needed.

No particular limitation is imposed on the additives so far as they are those generally used in the field of resin industry. Examples thereof include hardening agents, hardening accelerators, hardening aids, fillers, heat stabilizers, weather stabilizers, flame retardants, leveling agents, antistatic agents, slip agents, antiblocking agents, anti-clouding agents, lubricants, colorants (dyes, pigments), natural oils, synthetic oils, waxes, antioxidants, ultraviolet absorbents, light stabilizers, etc. These additives may be used either singly or in any combination thereof in a proper amount within limits not impeding the objects of the present invention.

In the present invention, a rubbery polymer may be incorporated into the alicyclic polymers and/or the thermoplastic resins from the viewpoints of imparting strength or flexibility to the resulting laminate.

Examples of the rubbery polymer include diene rubbers such as natural rubber, polybutadiene rubber, polyisoprene rubber, acrylonitrile-butadiene copolymer rubber, styrenebutadiene copolymer rubber, styrene-isoprene copolymer rubber and styrene-butadiene-isoprene terpolymer rubber; hydrogenated products of these diene rubbers; saturated polyolefin rubbers, such as ethylene-α-olefin copolymers such as ethylene-propylene copolymers, and copolymers of propylene with another α-olefin; α-olefin-diene copolymer rubbers such as ethylene-propylene-diene copolymers, α-olefin-diene copolymers, isobutylene-isoplene copolymers and isobutylene-diene copolymers; special rubbers such as urethane rubber, silicone rubber, polyether rubber, acrylic rubber, propylene oxide rubber and ethylene-acrylic rubber; thermoplastic elastomers, such as aromatic vinyl polymers such as styrene-butadiene-styrene block copolymer rubber and styrene-isoprene-styrene block copolymer rubber, and hydrogenated products thereof; urethane-based thermoplastic elastomers; polyamide-based thermoplastic elastomers; and 1,2-polybutadiene-based thermoplastic elastomers.

The rubbery polymers may be used either singly or in any combination thereof. The blending proportion of the rubbery polymer is generally at most 100 parts by weight, preferably at most 70 parts by weight, more preferably at most 50 parts by weight per 100 parts by weight of the alicyclic polymer or thermoplastic resin, and the lower limit thereof is 0 part by weight.

### 5. Laminate:

Laminates (I) according to the present invention are laminates of a multi-layer structure comprising at least one alicyclic polymer layer (A), at least one thermoplastic resin layer (B) and at least one layer (C) of a resin composition comprising an alicyclic polymer and a thermoplastic resin.

The laminate according to the present invention may be any laminate so far as it is a laminate of a multi-layer structure having the alicyclic polymer layer (A), the thermoplastic resin layer (B) and the layer (C) of the resin composition comprising the alicyclic polymer and the thermoplastic resin. These layers may be each provided as either a singly layer or plural layers.

Specific examples of the multi-layer structure of the laminate according to the present invention include laminates (I-1) containing at least one basic layer structure of (B)/(C)/(A) [= (A)/(C)/(B)], such as
(1) thermoplastic resin layer (B)/resin composition layer (C)/alicyclic polymer layer (A);
(2) thermoplastic resin layer (B)/resin composition layer (C)/alicyclic polymer layer (A)/resin composition layer (C)/thermoplastic resin layer (B);
(3) thermoplastic resin layer (B)/resin composition layer (C)/alicyclic polymer layer (A)/resin composition layer (C)/thermoplastic resin layer (B)/resin composition layer (C)/alicyclic polymer layer (A); and
(4) thermoplastic resin layer (B)/resin composition layer (C)/alicyclic polymer layer (A)/resin composition layer (C)/thermoplastic resin layer (B)/resin composition layer (C)/alicyclic polymer layer (A)/resin composition layer (C)/thermoplastic resin layer (B).

In the laminates (I-1) having such a layer structure, the resin composition layer (C) is interposed between the thermoplastic resin layer (B) and the alicyclic polymer layer (A), whereby moisture permeability can be controlled, and moreover tearability or cuttability can be enhanced, and separation at an interface between the individual layers can be made hard to occur.

As other specific examples of the laminate according to the present invention, may be mentioned laminates (I-2) containing a layer structure of (A)/(C)/(A), such as (5) thermoplastic resin layer (B)/alicyclic polymer layer (A)/resin composition layer (C)/alicyclic polymer layer (A)/thermoplastic resin layer (B). In the laminates (I-2) having such a layer structure, the resin composition layer (C) is held between 2 alicyclic polymer layers (A), whereby the laminate can be provided as a laminate having high surface smoothness.

The laminates (I) according to the present invention are preferably laminates of the layer structures (1) to (5), more preferably laminates of the layer structures (1), (2) and (5), with laminates of the layer structure (5) being particularly preferred from the viewpoints of surface smoothness, appearance and cuttability. From the viewpoint of adhesion to others, laminates with the thermoplastic resin layer (B) arranged as an outermost layer are preferred, with laminates with the thermoplastic resin layers (B) arranged as both outermost layers being particularly preferred.

However, the laminates (I) according to the present invention are not limited to the laminates of the layer structures (1) to (5), and may be laminates of various layer structures such as
(6) thermoplastic resin layer (B)/resin composition layer (C)/alicyclic polymer layer (A)/thermoplastic resin layer (B);
(7) thermoplastic resin layer (B)/resin composition layer (C)/alicyclic polymer layer (A)/resin composition layer (C);
(8) thermoplastic resin layer (B)/resin composition layer (C)/alicyclic polymer layer (A)/resin composition layer (C)/alicyclic polymer layer (A);
(9) thermoplastic resin layer (B)/resin composition layer (C)/alicyclic polymer layer (A)/resin composition layer (C)/thermoplastic resin layer (B)/alicyclic polymer layer (A);
(10) thermoplastic resin layer (B)/alicyclic polymer layer (A)/resin composition layer (C)/alicyclic polymer layer (A)/thermoplastic resin layer (B)/resin composition layer (C);
(11) thermoplastic resin layer (B)/alicyclic polymer layer (A)/resin composition layer (C)/alicyclic polymer layer (A)/thermoplastic resin layer (B)/resin composition layer (C)/alicyclic polymer layer (A); and
(12) thermoplastic resin layer (B)/alicyclic polymer layer (A)/resin composition layer (C)/alicyclic polymer layer (A)/thermoplastic resin layer (B)/resin composition layer (C)/thermoplastic resin layer (B).
   As the alicyclic polymer, is preferred a hydrogenated product of a ring-opening (co)polymer of a norbornene monomer. As the thermoplastic resin, is preferred a polyolefin resin such as polyethylene or polypropylene. When the alicyclic polymer layer (A) composed of said hydrogenated product is referred to as the alicyclic polymer layer (A1), and the polyolefin resin layer is referred as the PO layer (B1), specific preferable examples of laminates containing such alicyclic polymer layer (A1) and PO layer (B1) include:
(13) PO layer (B1)/resin composition layer (C)/alicyclic polymer layer (A1);
(14) PO layer (B1)/resin composition layer (C)/alicyclic polymer layer (A1)/resin composition layer (C)/PO layer (B1); and
(15) PO layer (B1)/alicyclic polymer layer (A1)/resin composition layer (C)/alicyclic polymer layer (A1)/PO layer (B1).

As the resin composition forming the resin composition layer (C), may be used a resin composition comprising alicyclic polymer and a linear low density polyolefin (d). When the resin composition layer (C) containing the linear low density polyolefin (d) is referred to as the resin composition layer (C1), specific preferable examples of laminates containing such a layer include:
(16) PO layer (B1)/resin composition layer (C1)/alicyclic polymer layer (A1);
(17) PO layer (B1)/resin composition layer (C1)/alicyclic polymer layer (A1)/resin composition layer (C1)/PO layer (B1); and
(18) PO layer (B1)/alicyclic polymer layer (A1)/resin composition layer (C1)/alicyclic polymer layer (A1)/PO layer (B1).

The polyolefin resin forming the PO layer (B1) and the linear low density polyolefin (d) contained in the resin composition layer (C1) may be the same or different from each other.

The thickness of the laminate (I) according to the present invention may be suitably selected as necessary for the end application intended. The thickness of the laminate is of the order of generally 0.5 µm to 5 mm, preferably 1 µm to 2 mm, more preferably 5 µm to 1 mm.

In the laminates according to the present invention, no particular limitation is imposed on the thickness of each of the alicyclic polymer layer (A), the thermoplastic resin layer (B) and the resin composition layer (C). However, from the viewpoint of enhancing transparency, the thickness of the alicyclic polymer layer (A) is generally 0.1 to 2,000 µm, preferably 0.1 to 600 µm, more preferably 0.1 to 180 µm, particularly preferably 0.3 to 70 µm, the thickness of the thermoplastic resin layer (B) is generally 0.1 to 1,000 µm, preferably 0.15 to 500 µm, more preferably 0.2 to 250 µm, particularly preferably 0.5 to 100 µm, and the thickness of the resin composition (C) is generally 0.02 to 1,000 µm, preferably 0.05 to 400 µm, more preferably 0.07 to 75 µm, particularly preferably 0.1 to 30 µm.

The thickness ratio [(A):(B)] of the alicyclic polymer layer (A) to the thermoplastic resin layer (B) is generally 1:99 to 70:30, preferably 5:95 to 55:45. The thickness ratio is based on the total thickness of the respective layers, and the same shall apply hereinafter. The thickness of the resin composition layer (C) is generally 5 to 100%, preferably 10 to 70% based on the total thickness (100%) of the alicyclic polymer layer (A) and the thermoplastic resin layer (B). When the thickness of the resin composition layer (C) is made small, the tendency is toward improved transparency. When the thickness is made great, the tendency is toward lowered moisture permeability and improved tearability or cuttability.

A proportion [(a):(b)] of the alicyclic polymer (a) to the thermoplastic resin (b) contained in the resin composition layer (C) is generally 1:99 to 90:10, preferably 5:95 to 70:30, more preferably 10:90 to 60:40 in terms of a volume ratio. When this proportion to be contained is brought close to the thickness ratio of the alicyclic polymer layer (A) to the thermoplastic resin layer (B), the utilization efficiency of waste materials can be enhanced, and in turn, the production efficiency can be enhanced.

Laminates (II) according to the present invention are laminates of a multi-layer structure comprising at least one alicyclic polymer layer (A), at least one thermoplastic resin layer (B) and at least one resin layer (D) comprising a linear low density polyolefin having a long period of at most 275 angstroms as measured by the small angle X-ray scattering method. From the viewpoint of distinguishing from the laminates (I) described above, the resin layer (D) may be said to be a resin layer containing the linear low density polyolefin (d) alone or a resin composition layer containing the linear low density polyolefin (d) and another thermoplastic resin.

A typical specific example of the laminate (II) is a laminate composed of the thermoplastic resin layer (B)/the resin layer (D)/the alicyclic polymer layer (A). The resin layer (D) is interposed between the thermoplastic resin layer (B) and the alicyclic polymer layer (A), whereby moisture permeability can be controlled, and moreover tearability or cuttability can be enhanced, and separation at an interface between the individual layers can be made hard to occur.

The resin layer (D) containing the linear low density polyolefin (d) is preferably formed from the linear low density polyolefin (d) alone or a resin composition containing the linear low density polyolefin (d) and an alicyclic polymer. When the resin composition containing the linear low density polyolefin (d) and another thermoplastic resin is used, a proportion of said another thermoplastic resin contained is generally at most 50% by volume, preferably at most 30% by volume, more preferably at most 10% by volume.

The thickness of the laminate (II) may be suitably selected as necessary for the end application intended. The thickness of the laminate is of the order of generally 0.5 µm to 5 mm, preferably 1 µm to 2 mm, more preferably 5 µm to 1 mm.

The thickness ratio [(A):(B)] of the alicyclic polymer layer (A) to the thermoplastic resin layer (B) is generally 1:99 to 70:30, preferably 5:95 to 55:45. The thickness of the resin layer (D) is generally 5 to 100, preferably 10 to 70 based on the total thickness (100) of the alicyclic polymer layer (A) and the thermoplastic resin layer (B). When the thickness of the resin layer (D) is made small, the tendency is toward improved transparency. When the thickness is made great, the tendency is toward lowered moisture permeability and improved tearability or cuttability.

### 6. Production process of laminate:

The laminates according to the present invention are not particularly limited by the production process thereof. For examples, they can be provided by forming the respective layers by a melt forming method or solution casting method and then laminating the layers on each other. The laminates can also be obtained by co-extruding resin components making up the respective layers. These methods may be combined with each other.

As a specific example of the solution casting method, may be mentioned a method in which a solution containing each resin material is coated or cast on a support by means of a bar coater, T-die coater, T-die equipped with a bar, doctor knife, Meyer bar, roll coater, die coater or the like, and the solution is dried. A method of coating by means spraying, brushing, rolling, spin coating, dipping or the like may also be adopted. When the desired coating thickness cannot be achieved by one coating, the coating may be conducted repeatedly.

Specific examples of the melt forming method include melt-extruding methods such as a method making use of a T-die and an inflation method, a calendering method, a hot pressing method, and an injection molding method. In order to form a layer composed of the alicyclic polymer, there may be mentioned a process in which the alicyclic polymer is heated to a temperature higher by 30 to 150°C than the glass transition temperature thereof to melt it, and the molten polymer is led to a roll nip between a set of calender rolls which are provided in parallel and rotated in reverse directions to each other and then drawn out of the roll nip in the form of a sheet or film. The temperature of the calender rolls is generally controlled to 150 to 230°C. As examples of the group of the calender rolls, may be mentioned groups of rolls with 4 rolls arranged under the inverted L type, Z type and inclined Z type, respectively.

A preferable production process of the laminate according to the present invention is a process for producing a multi-layer laminate, which comprises melting and kneading a laminate material comprising at least one alicyclic polymer layer (A) and at least one thermoplastic resin layer (B) to prepare a resin composition, and then extruding the resin composition, and an alicyclic polymer or a thermoplastic resin or both alicyclic polymer and thermoplastic resin.

The laminate material used in this production process has at least the alicyclic polymer layer and the thermoplastic resin layer. Such laminate materials include waste materials produced upon trimming laminates obtained by laminating an alicyclic polymer layer and a thermoplastic resin layer, laminates obtained by laminating an alicyclic polymer layer and a resin composition layer containing an alicyclic polymer and a thermoplastic resin, or the above-described laminates according to the present invention formed by extrusion or the like into standard sizes, and the like.

The extrusion conditions in the melt extrusion are the same as general conditions used for resin materials having almost the same glass transition temperature as the above-described resins. For example, the resin materials are extruded at a resin temperature of about 200 to 300°C through a T-die or the like, and the extruded laminate is taken up by take-up rolls preset to a temperature of about 40 to 100°C to cool the laminate. In order to lessen surface defects such as die lines, it is preferable to construct an extruder in such a manner that portions at which the resin remains are lessened as much as possible. Therefore, it is preferable to use a die free of flaw and the like within the interior or lip thereof as much as possible.

In order to laminate the respective layers, the resin materials for forming the respective layers may be co-extruded. From the viewpoint of dimensional stability, however, it is preferable to separately extrude the resin materials for forming the respective layers and then laminate the respective layers by calendering, rolling or the like.

The laminates according to the present invention may be used as they are. However, they may be formed into, for example, bags, or containers by sheet forming.

### 7. Use application :

The laminates according to the present invention may be used in a wide variety of fields. For example, the laminates in the form of a film or sheet may be used in packaging films (including wrapping films), agricultural films, conductive films, light diffusing films, electronic circuit boards, insulating sheets, optical materials, etc. The laminates in the form of a container may be used in chemical containers, drug containers, liquid chemical containers, food containers, drink containers, infusion bags, etc. Besides, they may also be used in light diffusing plates, light guiding plates, liquid crystal substrates, etc.

### EXAMPLES

The present invention will hereinafter be described more specifically by the following Examples and Comparative Examples. Physical properties and properties or characteristics in the present invention were measured and evaluated in accordance with the following respective methods:

### (1) Haze:

Haze was measured in accordance with ASTM D 1033.

### (2) Appearance upon stretching:

Both end portions (portions 5 cm inside from each end) of a laminate sample (30 cm x 30 cm) were held by hands and stretched by about 5 cm right and left to observe the appearance of the stretched portion, thereby making evaluation in accordance with the following standard:
A: None of clouding, wrinkling and torn line occurred at the stretched portion;
B: Clouding, wrinkling and/or torn line somewhat occurred at the stretched portion, and the range of practical use was limited according to use applications;
C: Clouding, wrinkling and/or torn line clearly occurred at the stretched portion;
D: Clouding, wrinkling and/or torn line clearly occurred at the stretched portion, and the degree of which was heavy.

### (3) Smoothness:

The appearance of a laminate sample was visually observed to evaluate it as to smoothness in accordance with the following standard:
A: Excellent in smoothness;
B: Generally good in surface profile, but fine irregularities locally occurred, and the range of practical use was limited according to use applications;
C: Large and small irregularities partially occurred, and the surface was rough;
D: Large and small irregularities occurred over substantially the whole area, and the surface was very rough.

### (4) Cuttability:

An aluminum-made cutter attached to an outer case for household food packaging laminate was used to cut a laminate sample, thereby evaluating it as to easy cuttability at this time in accordance with the following standard:
A: The sample could be easily cut without applying force to a very great extent, and the cut surface was sharp and good;
B: The sample could be easily cut by applying force, and the cut surface was good;
C: The sample could be cut by applying force to a considerably great extent, and the cut surface was somewhat disordered;
D: The sample was hard to be cut even by applying force to a considerably great extent, and the cut surface was greatly disordered.

### (5) Delamination test:

After stretching a laminate sample, the separated state of the respective layers was visually observed to judge whether delamination occurred or not.

### (6) Density:

Measured in accordance with ASTM D 1505.

### (7) Melt flow rate:

Measured at 190°C in accordance with ASTM D 1238.

### (8) Long period measured by a small angle X-ray scattering method:

After a linear low density polyolefin sample was melt-pressed for 4 minutes at 190°C under a pressure of 70 kg/cm², the sample was quenched at 30°C for 4 minutes to form the sample into a plate having a thickness of 1 mm. This plate was used as a specimen. An X-ray diffraction analyzer manufactured by Rigaku Industrial Co. was used to measure a scattering intensity curve under conditions of volume of 40 kV and current of 140 mA. The long period was calculated out on the basis of this data in accordance with a method known *per se* in the art.

### (9) Lamellar thickness:

The long period was determined from the scattering intensity curve obtained by the X-ray diffraction measurement, and the degree of crystallinity of the linear low density polyolefin sample was determined from a melting curve obtained by differential scanning calorimetry (DSC). The lamellar thickness was calculated out on the basis of these data in accordance with a method known *per se* in the art.

### [Referential Example 1]

A ring-opening copolymer of tricyclo[4.3.0.1^{2.5}]dec-3,7-diene with 8-ethyltetracyclo[4.4.0.1^{2,5}.1^{7,10}]dodec-3-ene was hydrogenated, thereby obtaining a hydrogenated ring-opening polymer having a weight average molecular weight of 36,000, a molecular weight distribution (Mw/Mn) of 2.1 and a glass transition temperature of 136°C.

Thirty parts by volume of the hydrogenated ring-opening polymer and 60 parts by volume of polyethylene (degree of crystallinity: 54%, melting point: 121°C, melt flow rate: 2 g/10 min.) were co-extruded by an extruder to obtain a laminated film having a structure that a hydrogenated ring-opening polymer layer was held by two polyethylene layers, a thickness ratio of the polyethylene layer/the hydrogenated ring-opening polymer layer/the polyethylene layer of 1/1/1 and a total thickness of about 40 µm.

### [Comparative Example 1]

The laminated film obtained in Referential Example 1 was melted and kneaded to prepare a resin composition. Twenty parts by volume of the resin composition (content of the hydrogenated ring-opening polymer: about 33% by volume) and 80 parts by volume of polyethylene were co-extruded by an extruder to obtain a laminated film having a structure that a resin composition layer was held by two polyethylene layers, a thickness ratio of the polyethylene layer/the resin composition layer/the polyethylene layer of 2/1/2 and a total thickness of about 40 µm.

### [Example 1]

The resin composition obtained by melting and kneading the laminated film obtained in Referential Example 1, the hydrogenated ring-opening polymer and polyethylene were co-extruded by an extruder to obtain a laminated film laminated in order of a polyethylene layer/a resin composition layer/a hydrogenated ring-opening polymer layer/a resin composition layer/a polyethylene layer and having a thickness ratio among the respective layers of 3/1/2/1/3 and a total thickness of about 56 µm.

### [Example 2]

A laminated film laminated in order of a polyethylene layer/a hydrogenated ring-opening polymer layer/a resin composition layer/a hydrogenated ring-opening polymer layer/a polyethylene layer and having a thickness ratio among the respective layers of 3/1/2/1/3 and a total thickness of about 13 µm was obtained in the same manner as in Example 1 except that the order of lamination and the thickness ratio of the respective layers were changed.

### [Example 3]

A laminated film laminated in order of a polyethylene layer/a resin composition layer/a hydrogenated ring-opening polymer layer and having a thickness ratio among the respective layers of 2/2/1 and a total thickness of about 24 µm was obtained in the same manner as in Example 1 except that the order of lamination and the thickness ratio of the respective layers were changed.

The evaluation results of the laminated films obtained in Examples 1 to 3 and Comparative Example 1 are shown in Table 1.

**Table 1**

| | Comp. Ex. 1 | Ex. 1 | Ex. 2 | Ex. 3 |
|---|---|---|---|---|
| Layer structure | PE/BL/PE | PE/BL/COP/ BL/PE | PE/COP/BL/ COP/PE | PE/BL/COP |
| Thickness ratio | 2/1/2 | 3/1/2/1/3 | 3/1/2/1/3 | 2/2/1 |
| Thickness [µm] | 40 | 56 | 13 | 24 |
| Haze | 35 | 26 | 6 | 12 |
| Appearance upon stretching | D | B | A | B |
| Surface smoothness | D | C | A | B |
| Cuttability | D | A | A | A |
| (Note) (1) PE: Polyethylene layer, (2) COP: Hydrogenated ring-opening polymer layer, (3) BL: Layer of resin composition of PE and COP. | | | | |

### [Comparative Example 2]

Thirty parts by volume of the hydrogenated ring-opening polymer obtained in Referential Example 1 were extruded by an extruder to form a hydrogenated ring-opening polymer layer. On the other hand, 30% by volume of polypropylene [product of Nippon Polyolefin K.K., SG510, Vicat softening point: 135°C, density: 148°C (DSC method)] were extruded by an extruder to form a polypropylene layer. The hydrogenated ring-opening polymer layer and polypropylene layer were than rolled by calender rolls to laminate them on each other, thereby producing a laminated film having a thickness ratio of the hydrogenated ring-opening polymer layer to the polypropylene layer of 1:1 and a total thickness of about 260 µm.

The haze of this laminated film was 17. When stress was applied to this laminated film by stretching and folding it, clouding, wrinkling and/or torn line occurred. When strong stress was applied to the laminated film, it underwent delamination, whereby the respective layers could be separated from each other.

### [Example 4]

As linear low density polyethylene, was used linear low density polyethylene having a lamellar thickness of 130 angstroms, a long period of 235 angstroms, a degree of crystallinity of 54%, a density of 0.93 g/cm³, a melt flow rate of 1.7 g/10 min., a Vicat softening point of 110°C and a melting point of 121°C. This linear low density polyethylene is an ethylene-hexene copolymer obtained by polymerization making use of a metallocene catalyst obtained by adding N,N-dimethylanilinium tetrakis-(pentafluorenyl) borate to a mixture of diphenylmethylene-(cyclopentadienyl)(fluorenyl)zirconium dichloride and triisobutylaluminum.

Six parts by volume of this linear low density polyethylene were extruded by an extruder to form a linear low density polyolefin layer, 30 parts by volume of the hydrogenated ring-opening polymer were extruded by an extruder to form a hydrogenated ring-opening polymer layer, 30 parts by volume of polypropylene (SG-510) were extruded by an extruder to form a polypropylene layer, and the linear low density polyolefin layer was held between the polypropylene layer and the hydrogenated ring-opening polymer layer to bring them into close contact with one another. The respective layers were rolled by calender rolls to laminate them, thereby obtaining a laminated film laminated in order of the polypropylene layer/the linear low density polyolefin layer/hydrogenated ring-opening polymer layer and having a thickness ratio of 10/2/10 and a total thickness of about 260 µm.

This laminated film had the same haze value, 17 as the laminated film of Comparative Example 2 though it had a 3-layer structure. When stress was applied to this laminated film by stretching and folding it, none of clouding, wrinkling and torn line occurred. Further, the polypropylene layer and the hydrogenated ring-opening polymer layer were completely bonded through the linear low density polyolefin layer, and so no delamination occurred. In addition, this laminated film was also excellent in tearability and cuttability.

### [Example 5]

Seven parts by weight of the above-described linear low density polyolefin and 3 parts by weight of the above-described hydrogenated ring-opening polymer were kneaded, and 6 parts by volume of the kneaded product was extruded by an extruder to form a resin composition layer containing the linear low density polyolefin and the hydrogenated ring-opening polymer. A laminated film having a total thickness of about 260 µm was then obtained in the same manner as in Example 4 except that this resin composition layer was replaced for the linear low density polyolefin layer in Example 4. The laminated film thus obtained had a haze of 20 though the resin composition layer containing the hydrogenated ring-opening polymer and the linear low density polyolefin was laminated. When stress was applied to this laminated film by stretching and folding it, none of clouding, wrinkling and torn line occurred. Further, the respective layers were fully bonded to one another, and so no delamination occurred. In addition, this laminated film was also excellent in tearability and cuttability.

### INDUSTRIAL APPLICABILITY

The laminates according to the present invention are free of clouding, high in transparency and heat resistance, excellent in tearability or cuttability, low in moisture permeability and good in adhesion to others, and thus can be used in a wide variety of use applications such as food packaging films (including wrapping films), drug packaging films, agricultural films, various kinds of plastic containers.

## Claims

1. A laminate of a multi-layer structure, comprising at least one alicyclic polymer layer (A), at least one thermoplastic resin layer (B) and at least one layer (C) of a resin composition comprising an alicyclic polymer and a thermoplastic resin.

2. The laminate according to Claim 1, wherein the thermoplastic resin contained in the resin composition layer (C) is a linear low density polyolefin having a long period of at most 275 angstroms as measured by the small angle X-ray scattering method

3. The laminate according to Claim 1, wherein the alicyclic polymer forming the alicyclic polymer layer (A) is a norbornene polymer.

4. The laminate according to Claim 3, wherein the norbornene polymer is a hydrogenated product of a ring-opening polymer of a norbornene monomer.

5. The laminate according to Claim 1, wherein the multi-layer structure is composed of:
(i) thermoplastic resin layer (B)/resin composition layer (C)/alicyclic polymer layer (A),
(ii) thermoplastic resin layer (B)/resin composition layer (C)/alicyclic polymer layer (A)/resin composition layer (C)/thermoplastic resin layer (B), or
(iii) thermoplastic resin layer (B)/alicyclic polymer layer (A)/resin composition layer (C)/alicyclic polymer layer (A)/thermoplastic resin layer (B).

6. The laminate according to Claim 1, wherein the total thickness ratio [(A):(B)] of the alicyclic polymer layer (A) to the thermoplastic resin layer (B) is 1:99 to 70:30.

7. The laminate according to Claim 1, wherein the thickness proportion of the resin composition layer (C) is 5 to 100% based on the total thickness (100%) of the alicyclic polymer layer (A) and the thermoplastic resin layer (B).

8. The laminate according to Claim 1, wherein the thickness of the alicyclic polymer layer (A) is 0.1 to 180 µm, the thickness of the thermoplastic resin layer (B) is 0.2 to 250 µm, and the thickness of the resin composition layer (C) is 0.07 to 75 µm.

9. The laminate according to Claim 1, wherein the thickness is 0.5 µm to 5 mm.

10. The laminate according to Claim 1, which is in the form of a film or sheet.

11. The laminate according to Claim 1, which is formed in the form of a container.

12. A laminate of a multi-layer structure, comprising at least one alicyclic polymer layer (A), at least one thermoplastic resin layer (B) and at least one resin layer (D) comprising a linear low density polyolefin having a long period of at most 275 angstroms as measured by the small angle X-ray scattering method.

13. The laminate according to Claim 12, wherein the linear low density polyolefin has a long period of at most 275 angstroms as measured by the small angle X-ray scattering method, and a lamellar thickness of at most 145 angstroms.

14. The laminate according to Claim 12, wherein the linear low density polyolefin is an ethylene-α-olefin copolymer obtained by polymerization making use of a metallocene catalyst.

15. The laminate according to Claim 12, wherein the multi-layer structure is composed of alicyclic polymer layer (A)/resin layer (D)/thermoplastic resin layer (B).

16. The laminate according to Claim 12, wherein the resin layer (D) contains only a linear low density polyolefin having a long period of at most 275 angstroms as measured by the small angle X-ray scattering method as a resin component.

17. A resin composition comprising an alicyclic polymer and a linear low density polyolefin having a long period of at most 275 angstroms as measured by the small angle X-ray scattering method.

18. A process for producing a multi-layer laminate, which comprises melting and kneading a laminate material comprising at least one alicyclic polymer layer (A) and at least one thermoplastic resin layer (B) to prepare a resin composition, and then extruding the resin composition, and an alicyclic polymer or a thermoplastic resin or both alicyclic polymer and thermoplastic resin.

19. The production process according to Claim 18, wherein the extrusion comprises the steps of extruding the resin materials at a resin temperature of 200 to 300°C through a T-die, taking up the extruded laminate by take-up rolls preset to a temperature of 40 to 100°C and then cooling the laminate.
